# EUROPÄISCHE PATENTSCHRIFT

(11) **EP 0 760 330 B1**
(45) Veröffentlichungstag und Bekanntmachung des Hinweises auf die Patenterteilung: **15.03.2000**
(21) Anmeldenummer: 96112655.4
(22) Anmeldetag: 06.08.1996
(51) Int. Cl.: B62D 25/14, B62D 25/08, B62D 29/00, B60K 37/00

(54) **Querträger für die Befestigung des Armaturenbrettes**
Crossbar for attachment of a dashboard
Traverse de support de fixation d'un tableau de bord

(30) Priorität: 30.08.1995 DE 19531876
(43) Veröffentlichungstag der Anmeldung: 05.03.1997
(73) Patentinhaber: DaimlerChrysler AG, 70567 Stuttgart (DE); Petri AG, 63743 Aschaffenburg (DE); Micro Compact Car smart GmbH, 71272 Renningen (DE)
(72) Erfinder: Sinner, Michael, 72108 Rottenburg (DE); Kruse, Martin, 71065 Sindelfingen (DE); Holzapfel, Bernhard, 73630 Remshalden (DE); Schick, Ulrich, 72202 Nagold (DE); Reh, Stefan, 63939 Wörth (DE)

(56) Entgegenhaltungen:
- DE-A- 4 204 495
- DE-A- 4 232 846
- DE-A- 4 338 666
- DE-U- 9 418 788

## Beschreibung

Die Erfindung betrifft einen Querträger für die Befestigung des Armaturenbrettes nach dem Oberbegriff des Patentanspruches 1.

Aus der DE 42 328 46 A1 ist ein aus Leichtmetallstrangpreßteilen hergestellter Querträger für das Armaturenbrett eines Kraftfahrzeuges bekannt, der Befestigungsrippen und Löcher zum Anbringen beispielsweise eines Handschuhfaches oder eines Airbags aufweist. Da diese Halterungen angeschraubt werden müssen, ist die Montage relativ aufwendig.

Aus der DE 42 04 495 C2 ist ein ebenfalls als Strangpreßprofil ausgebildeter Querträger für die Armaturen bekannt, der seitlich mit den A-Säulen des Fahrzeuges verbunden wird und der mit Anformungen oder Profilabschnitten versehen ist, die entweder unmittelbar als Kanal z.B. zur Verlegung von Kabeln oder als Befestigungsabschnitte zum Einhängen beispielsweise eines Funktionsteiles dienen können. Auch hier muß jedoch zur Befestigung eines Funktionsteiles entweder noch eine Schraube oder ein als Spreizclips ausgebildeter Halter in eine entsprechende Vertiefung eingedrückt werden. Vor allen Dingen ist es mit den bekannten Bauarten nicht ohne weiteres möglich, eine einfache Montage beispielsweise des Airbagmoduls für den Beifahrer dann vornehmen zu können, wenn der Querträger bereits eingebaut ist und eine Montage im wesentlichen nur noch von oben her möglich ist.

Die DE 43 38 666 A1 zeigt und beschreibt ein Airbaggehäuse und dessen Befestigung, wobei ein aus zwei Halbschalen aufgebauter Querträger an seiner Oberseite mit Öffnungen versehen ist, in die Zapfen eines Airbagmoduls eingreifen, das an einer im unteren Bereich des Querträgers zum Fahrgastraum hin weisenden Anlagefläche anliegt und dort mit Schrauben befestigt ist. Auch bei solchen Bauarten kann eine einfache Montage von oben her nicht vorgenommen werden.

Ein Querträger der eingangs genannten Art ist aus dem DE-Gbm 94 18 788 bekannt. Das dort vorgesehene Strangpreßprofil besitzt eine nach oben offene und im Einbauzustand schräg zur Windschutzscheibe hin gerichtete Nut, in die Anbaumodule mit einer hakenförmigen Kante eingehängt und in die Anbaulage verschwenkt werden können, wo elastische Rasthaken die endgültige Lage an entsprechenden Stegen des Strangpreßprofiles sichern. Bei anderen Ausführungsformen ist dort vorgesehen, am unteren Ende das Anbauteil durch selbstschneidende Schrauben zu befestigen. Diese letztere Bauart führt aber wieder zu den vorher angedeuteten Nachteilen. Wird das Anbauteil nur durch elastische Kräfte gehalten, ist eine ausreichend stabile Befestigung, insbesondere bei Airbagmodulen, nicht immer gesichert.

Der vorliegenden Erfindung liegt daher die Aufgabe zugrunde, einen Querträger der eingangs genannten Art und die dazugehörigen Anbauteile so auszubilden, daß eine einfache und positionsunabhängige Montage (gleiches Profil für Rechts- und Linkslenker) in sicherer Weise möglich ist, auch wenn eine Schraubbefestigung in der Unterseite nicht möglich ist.

Zur Lösung dieser Aufgabe werden durch Erfindung bei einem Querträger der eingangs genannten Art in einer ersten Ausführungsform die kennzeichnenden Merkmale des Patentanspruches 1 vorgesehen.

Durch diese Ausgestaltung ist zum einen ein einfaches Einhängen bzw. Einschieben der Anbauteile mit ihrer Oberkante möglich, und zwar so, daß nach dem Einhängen durch einen gewissen Schwenkvorgang die Anlageflächen aufeinander zu liegen kommen, wobei im endgültigen Anbauzustand auch ein Formschluß an der der offenen Nut gegenüberliegenden Unterseite des Querträgers erreicht wird. So ergibt sich eine stabile Abstützung des Anbauteiles am Querträger über die gesamte Baubreite des Anbauteiles. Dabei wird das Anbauteil, beispielsweise ein Airbagmodul im Einbauzustand, mit einer Abstützfläche etwa senkrecht zu einer möglichen Aufprallrichtung gehalten, was auch gilt, wenn als Anbauteil eine Lenkungskonsole vorgesehen ist, deren Anlagefläche im Einbauzustand etwa senkrecht zur Belastungsrichtung der Lenksachse ist. So kann neben einer dadurch sehr vereinfachten Montage auch eine stabile, kraftübertragende Anordnung ereicht werden, ohne daß, wie beim Stand der Technik, eine Schraubfestigung an der Unterseite des Querträgers notwendig wird.

In Weiterbildung der Erfindung kann zwischen dem einhängbaren Steg oder der Rippe und der nicht mit der Hinterschneidung versehenen Wand der offenen Nut ein Paßstein eingefügt sein, der die endgültige Verbindung herstellt. Es ist aber auch möglich, die der Hinterschneidung gegenüberliegende Wand der Nut schräg nach außen zum Boden der Nut hin anzuordnen und eine mit einer Schraube versehene Keilleiste dem Steg oder der Rippe so zuzuordnen, daß sie sich beim Anziehen hinter der Nutwandung und einer schrägen Fläche des Steges oder der Rippe verkeilt. Auch diese Ausführung bringt die gleichen Montagevorteile, wie die zuerst genannte Ausführung mit sich, wobei ein Schraubvorgang nur noch zum Festziehen der Keilleiste notwendig ist, und daher wenig Montagezeit erfordert. Dies gilt auch dann, wenn beispielsweise das Anbauteil als eine Lenksäulenkonsole ausgebildet ist, die in Weiterbildung der Erfindung aus einer zum Motorraum und zum Fahrgastraum hin weisenden Lenksäulenkonsole besteht, die untereinander zusammensetzbar sind.

Die der Erfindung zugrundeliegende Aufgabe läßt sich aber auch in vorteilhafter Weise dadurch lösen, daß die Nut an der Oberkante der Anlagefläche angrenzt und eine gekrümmte Führung für einen ihrem Querschnitt angepaßten Steg oder für eine Rippe des Moduls bildet, die so ausgelegt ist, daß im Anbauzustand die Anschlagfläche des Anbaumoduls satt an der Anlagefläche anliegt und ein dem Anbauteil an seiner Unterseite zugeordneter Einraststeg mit einem Teil in einer Ausnehmung des Stangpreßprofiles formschlüssig eingreift und/oder verrastet. Diese Ausführungsform weist den Vorteil auf, daß eine Verschraubung nicht oder nur noch zur Lagesicherung in Querrichtung erforderlich ist. Auch bei dieser Ausführungsform bildet somit die Führung durch die Nut des Strangpreßprofiles und die Rippe des Moduls eine Art Schwenkscharnier. Vorteil dieser Ausführung ist es, daß keinerlei zusätzlicher Schraubaufwand erforderlich wird. Im Einbauzustand verhindert die Krümmung der Nutführung ein ungewolltes Herausziehen des Moduls. Die Führung kann in einfacher Weise kreisbogenförmig ausgebildet sein. Die Gegenbefestigung an der Unterseite des Querträgers erfolgt ebenfalls formschlüssig.

Die Erfindung ist anhand von Ausführungsbeispielen in der Zeichnung dargestellt und wird im folgenden erläutert. Es zeigen
- Fig. 1: den schematischen Querschnitt parallel zu einer Längsmittelebene des Fahrzeuges durch den erfindungsgemäßen Querträger und ein an ihm angebrachte Airbagmodul in einer ersten Ausführungsform,
- Fig. 2: einen Schnitt ähnlich Fig. 1, jedoch durch eine zweite Ausführungsart,
- Fig. 3: den Schnitt ähnlich Fig. 1, jedoch durch eine dritte Ausführungsart und
- Fig. 4: den Schnitt ähnlich Fig. 1, jedoch durch eine vierte Ausführungsart.

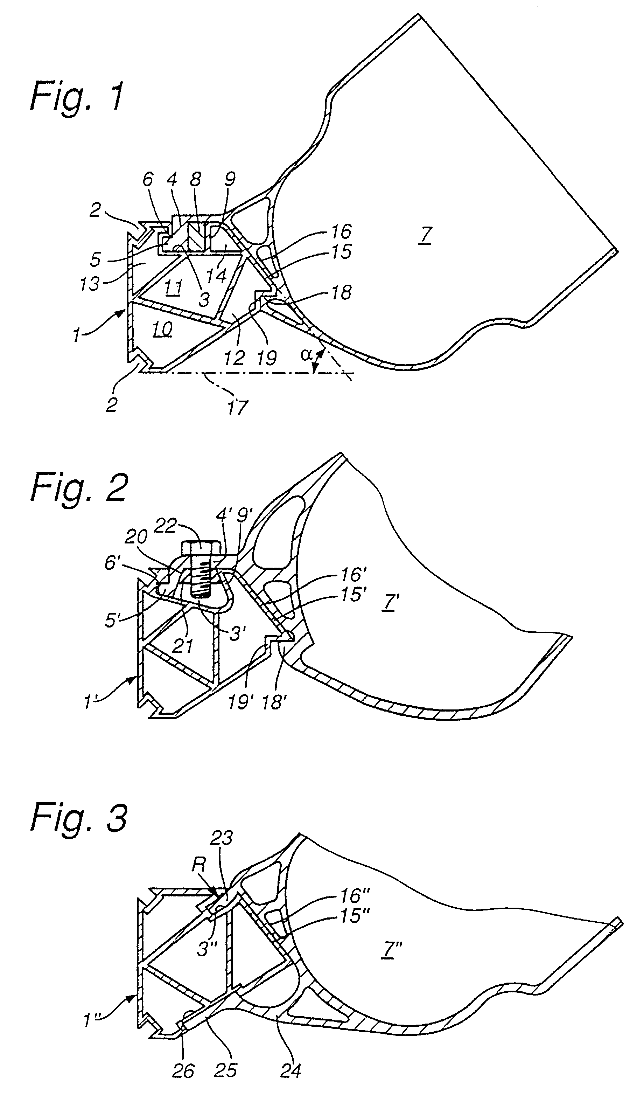

In der Fig. 1 ist ein aus Leichtmetall als Strangpreßprofil ausgebildeter Querträger (1) gezeigt, der durch seine Unterteilungen in mehrere Hohlkammern stabil ausgebildet ist und an seinen beiden nicht gezeigten Enden mit der A-Säule eines nicht gezeigten Kraftfahrzeuges verbunden oder verschweißt ist. Dieser Querträger (1) ist zum einen mit längs verlaufenden Profilierungen (2) z.B. zum Anbringen von Trennwandteilen oder von Teilen der Klima- oder Belüftungsanlage versehen, und er weist eine nach oben offene Nut (3) auf, die eine Hinterschneidung (6) auf der nach vorne - zum nicht gezeigten Motorraum - hinweisenden Seite aufweist. Die Öffnung der Nut (3) ist daher kleiner als ihr Boden. Unter dieser Hinterschneidung (6) greift ein Vorsprung (5) eines einteilig an dem Modul (7) für den Beifahrerairbag angeordneten Steges (4), der in der gezeigten Anbaulage des Moduls (7) durch einen Paßstein (8) gehalten ist, der zwischen die gerade verlaufende Wand (9) der Nut (3) und dem senkrechten Teil des Steges (4) formschlüssig eingeschoben ist. Der Querträger (1) ist außer mit den vorher schon erwähnten Hohlkammern (10, 11, 12, 13 und 14), von denen zumindest ein Teil als Kabel- oder als Luftführungskanal verwendet werden kann, mit einer zum Fahrzeuginneren weisenden Anlagefläche (15) versehen, die als eine ebene Fläche ausgebildet ist, die unter einem Winkel α zur Horizontalen (17) in Fahrtrichtung nach vorne geneigt ist. An dieser Anlagefläche (15) legt sich eine korrespondierend ausgebildete Anschlagfläche (16) des Moduls (7) an, die an ihrem unteren Ende in einen Vorsprung (18) übergeht, der in eine im Querschnitt (3) dreieckförmige Nut (19) an der Außenseite des Querträgers (1) im Anbauzustand eingreift. Auch das Modul (7) für den Beifahrerairbag ist aus einem Leichtmetallstrangpreßteil hergestellt, und es läßt sich, wie der Fig. 1 entnommen werden kann, in sehr einfacher Weise an dem beispielsweise bereits zwischen den A-Säulen montierten Querträger (1) dadurch befestigen, daß der Steg (4) mit dem Vorsprung (5) von oben her in die Nut (3) eingehängt, dann das Modul im Uhrzeigersinn verschwenkt und gleichzeitig in Richtung zur Hinterschneidung (6) verschoben wird, bis die Anlagefläche (16) und der Vorsprung (18) die in der Fig. 1 dargestellte Lage eingenommen haben. Dann wird der Paßkeil (8) seitlich eingeschoben, so daß das Modul (7) bereits formschlüssig und fest montiert ist.

Die Fig. 2 zeigt eine Abwandlung insofern, als zum einen die Formgebung der nach oben offenen Nut (3*'*) etwas anders ausgebildet ist. Hier verläuft die Wandung (9*'*) von der Öffnung her schräg nach außen, so daß der Boden der Nut (3*'*) wesentlich breiter als die Einführöffnung ist. Auch bei dieser Ausführungsform ist jedoch eine Hinterschneidung (6*'*) vorgesehen. Unter diese Hinterschneidung (6*'*) greift der Vorsprung (5*'*) des Steges (4*'*), der hier aber auf seiner Innenseite mit einer schrägen Wand (20) versehen ist, die das Spiegelbild der schrägen Wand (9*'*) darstellt. Dem Steg (4*'*) ist eine Keilleiste (21) und eine Schraube (22) zugeordnet. Der Montagevorgang erfolgt hier ähnlich wie bei der Ausführungsform der Fig. 1. Der Steg (4*'*) wird zu einem Vorsprung (5*'*) in die offene Nut (3*'*) geführt. Das Modul (7*'*) wird im Uhrzeigersinn verschwenkt, bis der Vorsprung (5*'*) unter die Hinterschneidung (6*'*) greift. In diesem Zustand ist die Keilleiste (21) bei geöffneter Schraube noch in dem breiteren Teil der Nut (3*'*) gelegen. Der Vorsprung (18*'*) greift hinter die Nut (19*'*), dann wird durch Anziehen der Schraube (22) die Keilleiste (21) in die Stellung der Fig. 2 gezogen, in der das Modul (7*'*) formschlüssig am Querträger (1*'*) verankert ist.

Die Ausführungsform der Fig. 3 stellt eine gewisse Abwandlung der beiden vorher genannten Bauarten insofern dar, als hier eine Befestigung nur durch formschlüssiges Einschieben möglich ist. Zu diesem Zweck ist der Querträger (1*''*) an seiner Oberseite mit einer schräg nach oben zum nicht gezeigten Fahrgastraum hin geneigten Nut (3*''*) versehen, die als eine gekrümmte Führung für einen ihrem Querschnitt angepaßten Steg (23) des Beifahrerairbagmoduls (7*''*) ausgebildet ist. Die Nut (3*''*) besitzt parallele Wände, die beide unter dem Radius R eines Kreisbogens gekrümmt sind. Entsprechend ist der Steg (23) ausgebildet. Das Modul (7*''*) besitzt bei dieser Bauart neben der Anschlagfläche (16*''*) an seiner Unterseite noch einen Abstützsteg (24) mit einem Abstützflansch (25), der sich in eine entsprechende Ausnehmung (26) des Querträgers (1*''*) legt, wenn der Anbauzustand erreicht ist.

Bei dieser Ausführungsform wird das freie Ende des Steges (23), sowie auch bei den Ausführungsformen der Figuren 1 und 2 von oben her in die Führung innerhalb der Nut (3*''*) eingeführt, so daß unter Schwenkung des Moduls (7*''*) im Uhrzeigersinn der Steg (23) immer weiter in die Nut (3*''*) eingeschoben werden kann, bis die Anschlagfläche (16*''*) an der Anlagefläche (15*''*) anliegt und der Flansch (25), gegebenenfalls auch unter einer leichten elastischen Verformung, in seine Vertiefung (26) einrascet. Anhand der in der Fig. 3 gezeigten Anbaulage wird leicht erkennbar, daß das Modul (7*''*) sich aus dieser Lage nicht mehr herausbewegen läßt, ohne daß der Flansch (25) zunächst aus seiner Raststellung gebracht wird; dann wiederum wäre ein Zurückschwenken zum Zweck der Dem ontage möglich. Die in der Fig. 3 gezeigte Ausführungsform benötigt für den Montagevorgang keinerlei zusätzliche Arbeitsvorgänge. Es wird lediglich ein formschlüssiges Einschieben von oben her vorgenommen, bis der Anbauzustand erreicht ist.

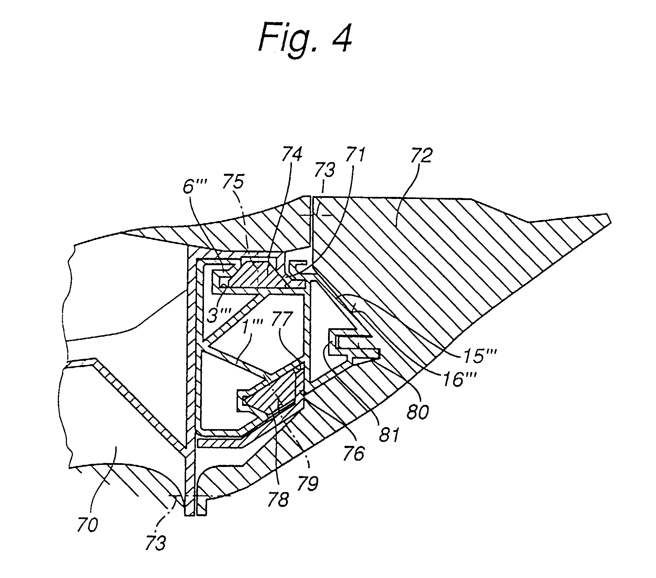

In Fig. 4 ist eine Abwandlung eines Anbauteiles für den Querträger (1*'''*) in sofern gezeigt, als hier in die nach oben offene Nut (3*'''*) kein Vorsprung der hinteren Lenkungskonsole (72) eingreift, die im übrigen mit ihrer Anschlagfläche (16*'''*) an der Anlagefläche (15*'''*) des Querträgers (1*'''*) anliegt. Die hintere Lenkungskonsole (72) ist vielmehr mit Hilfe einer oberen und unteren Schraubverbindung (73), die nur schematisch angedeutet ist, mit einer vorderen Lenkungskonsole (70) verbunden und diese wiederum greift mit einem Steg (71) in die nach oben offene Nut (3*'''*) ein und wird mit diesem Steg (71) in dieser Nut (3*'''*) durch einen keilförmig ausgebildeten Gleitstein (74) gehalten, der durch eine mit ihrer Achse (75) angedeutete Schraube zusammen mit dem Steg (71) in der Nut (3*'''*) verklemmt ist. Die hintere Lenkungskonsole (72) besitzt im übrigen auch noch einen Befestigungssteg (76) und greift mit diesem in eine nach unten offene schwalbenschwanzförmige Nut (77) ein und wird in dieser Nut (77) durch einen keilförmigen Gleitstein (78) gehalten, der ebenfalls durch eine nur mit ihrer Achse angedeutete Schraube (79) gehalten ist. Zur Lagefixierung weist die hintere Konsole (72) auch noch eine zum Querträger (1*'''*) hin abstehende Rippe (80) auf. Mit dieser Rippe (80) greift die hintere Lenkungskonsole (72) in eine rechtwinklige Nut (81) des Querträgers (1*'''*).

Bei dieser Ausführungsform besteht das Anbauteil, das hier von einer vorderen und einer hinteren Lenkungskonsole gebildet ist, daher aus zwei mit der Schraubverbindung (73) zusammengefügten Teilen, die sich beidseitig am Querträger (1*'''*) anlegen und auch auf die erfindungsgemäß einfache Weise an den Träger angebracht werden können. Dabei besteht hier auch noch die sehr vorteilhafte Möglichkeit, ohne Änderung der Bauteile die Lenkungskonsolen (70 und 72) in den Positionen für Rechts- und Linkslenkervarianten anzubringen, ohne daß Sonderkonstruktionen notwendig wären. Durch die Ausbildung des Querträgers und der Anbauteile läßt sich die Position der Lenkungskonsole über die gesamte Breite des Querträgers beliebig wählen.

## Patentansprüche

1. Querträger für die Befestigung des Armaturenbrettes sowie der Bedien- und Anzeigeelemente eines Kraftfahrzeuges, der aus einem Leichtmetallstrangpreßprofil besteht und mit Anbauteilen wie einem Beifahrerairbagmodul und/oder Konsolen zur Befestigung der Lenkanlage versehen ist, wobei das Strangpreßprofil mindestens eine, in der Einbaulage nach oben offene Nut (3, 3*'*,3*'''*) und eine zur Fahrgastraumseite gerichtete Anlagefläche (15, 15', 15*'''*) aufweist, und daß das Anbauteil (7, 7*'*, 70, 72) mit einer in die offene Nut formschlüssig einfügbaren Steg-oder Rippenausbildung (4, 4*'*, 71) sowie mit einer im Anbauzustand an der Anlagefläche (15, 15*'*, 15*'''*) anliegenden Anschlagfläche (16, 16*'*, 16*'''*) versehen ist,
**dadurch gekennzeichnet, daß**
die Anlagefläche (15, 15*'*, 15*'''*) eine schräge Ebene bildet, die unter einem in der Fahrtrichtung des Kraftfahrzeuges nach vorne geneigten Winkel α angeordnet ist, daß die offene Nut (3, 3*'*, 3*'''*) auf der nach vorne zum Motorraum liegenden Seite mit einer Hinterschneidung (6, 6*'*, 6*'''*) versehen ist, daß der Steg oder die Rippe (4, 4*'*, 4*''*) schmäler als die Nut sind und ein in die Hinterschneidung passender Vorsprung (5, 5*'*, 74 vorgesehen ist, und daß die Anschlagfläche (16, 16*'*) auf der zum Fahrgastraum gerichteten Seite der Anlagefläche (15, 15*'*) anliegt, und mit einem an ihrer Unterseite angeordneten Vorsprung (18, 18*'*, 80) in eine an der Außenseite des Strangpreßprofiles angeordnete Nut (19, 19', 81) eingreift, wenn der Vorsprung (5, 5*'*, 74) in die Hinterschneidung (6, 6*'*, 6''') greift.

2. Querträger nach Anspruch 1,
**dadurch gekennzeichnet, daß**
zwischen dem Steg oder der Rippe (4) und der nicht mit der Hinterschneidung (6) versehene Wand (9) der Nut (3) ein Paßstein (8) einfügbar ist.

3. Querträger nach Anspruch 1,
**dadurch gekennzeichnet, daß**
die der Hinterschneidung (6*'*) gegenüberliegende Wand (9*'*) der Nut (3*'*) schräg nach außen zum Boden der Nut hin verläuft und daß eine, mit einer Schraube (22) versehene Keilleiste (21) dem Steg oder der Rippe so zugeordnet ist, daß sie sich beim Anziehen der Schraube hinter der Nutwandung (9*'*) und einer schrägen Fläche (20) des Steges oder der Rippe (4*'*) verkeilt.

4. Querträger nach Anspruch 1,
**dadurch gekennzeichnet, daß**
das Anbauteil aus einer zum Motorraum und zum Fahrgastraum hinweisenden Lenksäulenkonsole (70, 72) besteht.

5. Querträger nach Anspruch 4,
**dadurch gekennzeichnet, daß**
die Lenkkonsole aus zwei untereinander zusammensetzbaren Teilen besteht, von denen einer eine vordere Lenkkonsole (70) und der andere eine hintere Lenkkonsole (72) bildet.

6. Querträger für die Befestigung des Armaturenbrettes sowie der Bedien- und Anzeigeelemente eines Kraftfahrzeuges, der aus einem Leichtmetallstrangpreßprofil besteht und mit Anbauteilen wie einem Beifahrerairbagmodul und/oder Konsolen zur Befestigung der Lenkanlage versehen ist, wobei das Strangpreßprofil mindestens eine, in der Einbaulage nach oben offene Nut (3*''*) und eine zur Fahrgastraumseite gerichtete Anlagefläche (15*''*) aufweist, und daß das Anbauteil (7*''*) mit einer in die offene Nut formschlüssig einfügbaren Steg-oder Rippenausbildung (23) sowie mit einer im Anbauzustand an der Anlagefläche (15'') anliegenden Anschlagfläche (16") versehen ist,
**dadurch gekennzeichnet, daß**
die Nut (3'') an der Oberkante der Anlagefläche (15'') angrenzt und eine gekrümmte Führung für den ihrem Querschnitt angepaßten Steg oder Rippe (23) bildet, die so ausgelegt ist, daß im Anbauzustand die Anschlagfläche (16") des Anbaumoduls (7'') satt an der Anlagefläche (15'') anliegt und ein den Anbauteil an seiner Unterseite zugeordneter Einraststeg (24) mit einem Teil (25) in einer Ausnehmung (26) des Strangpreßprofiles verrastet.

7. Querträger nach Anspruch 6,
**dadurch gekennzeichnet, daß**
die Führung in der Nut (3'') kreisbogenförmig ausgebildet ist.

## Claims

1. Traverse support, for the attachment of the dashboard and of control elements and indicating instruments, which comprises a light metal extrusion, and which is provided with attaching parts such as a passenger air bag module and/or brackets for attaching the steering unit, whereby the extrusion member has at least one slot (3, 3', 3''') which is open at the top, and one contact surface (15, 15', 15''') which is aligned towards the passenger side, and whereby the attaching part (7, 7', 70, 72) is provided with a form-locking crosspiece- or rib-development (4, 4', 71), which can be inserted into the open slot, and with an abutment face (16, 16', 16''') which, in the attached state, lies on the contact surface (15, 15', 15'''),
characterized in that
the contact surface (15, 15', 15''') forms an inclined plane, which is disposed at an angle α to the direction of forward movement of the vehicle, in that the open slot (3, 3', 3''') is provided with a back taper (6, 6', 6''') on the side lying towards the engine compartment, in that the crosspiece or rib (4, 4', 4'') is more narrow than the slot and a projection (5, 5', 74), which passes into the back taper, is provided, and in that the abutment face (16, 16') lies on the side of the contact surface (15, 15') which is directed towards the passenger compartment, and engages in a groove (19, 19', 81), in the outer side of the extrusion member, when the projection (5, 5', 74) engages in the back taper (6, 6', 6''').

2. Traverse support in accordance with claim 1,
characterized in that a fitting block (8) can be inserted between the crosspiece or rib (4) and the face (9) of the slot (3) which is not provided with the back taper (6).

3. Traverse support in accordance with claim 1,
characterized in that the face (9'), of the slot (3'), opposite the back taper (6'), runs outwards, at an angle of inclination, towards the base of the slot, and in that the crosspiece or rib is so arranged, with a taper gib (21) provided with a bolt (22), such that, when the bolt is tightened, it wedges behind the slot face (9') and an inclined surface (20) of the crosspiece or rib (4').

4. Traverse support in accordance with claim 1,
characterized in that the attaching part comprises a steering column bracket (70, 72) which faces towards the engine compartment and towards the passenger compartment.

5. Traverse support in accordance with claim 1,
characterized in that the steering bracket comprises two parts which can be assembled one below the other, one of these two parts forming a front steering bracket (70), and the other one forming a rear steering bracket (72).

6. Traverse support, for the attachment of the dashboard and of control elements and indicating instruments, which comprises a light metal extrusion, and which is provided with attaching parts such as a passenger air bag module and/or brackets for attaching the steering unit, whereby the extrusion member has at least one slot (3'') which is open at the top, and one contact surface (15'') which is aligned towards the passenger side, and whereby the attaching part (7'') is provided with a form-locking crosspiece- or rib-development (23) which can be inserted into the open slot, and with an abutment face (16'') which, in the attached state, lies on the contact surface (15''),
characterized in that slot (3'') borders on the upper rim of the contact surface (15'') and forms an arched guiding means for the crosspiece or rib (23) which is adapted to the cross-sectional form of the said slot, the said crosspiece or rib (23) being so arranged that, in the attached state, the abutment face (16'') of the attachment module (7'') fully lies on the contact surface (15'') and a locking web (24) which is associated, on its underside, with the attachment part, engages, with a part (25), in a recess (26) of the extrusion member.

7. Traverse support in accordance with claim 6,
characterized in that the guiding means, in the slot (3''), has a circular, arched form.

## Revendications

1. Traverse de support pour la fixation d'un tableau de bord, ainsi que des éléments de commande et d'affichage d'un véhicule automobile, constituée d'un profilé extrudé en métal léger, comportant des pièces rapportées telles qu'un module de coussin à air pour passager et/ou des consoles pour la fixation de l'installation de direction, le profil extrudé présentant au moins une rainure (3, 3', 3") ouverte vers le haut en position montée et une face d'appui (15, 15', 15''') orientée vers le côté habitacle, et la pièce rapportée (7, 7', 70, 72) étant dotée d'une configuration à nervure ou ailette, pouvant être introduite avec ajustement de forme dans la rainure ouverte, ainsi que d'une surface de butée (16, 16', 16''') s'appliquant à l'état monté sur la surface d'appui (15, 15', 15'''),
caractérisée en ce que
la surface d'appui (15, 15', 15''') constitue un plan oblique qui est disposé sous un angle α incliné vers l'avant dans la direction de roulage du véhicule automobile, en ce que la rainure ouverte (3, 3', 3''') est dotée, sur le côté situé vers l'avant en direction du compartiment moteur, d'une contre-dépouille (6, 6', 6'''), et en ce que la nervure ou l'ailette (4, 4', 4''') est plus étroite que la rainure et une saillie (5, 5', 74), s'ajustant dans la contre-dépouille, étant prévue, et en ce que la surface de butée (16, 16') appuie sur le côté, tourné vers l'habitacle, de la surface d'appui (15, 15'), et s'engage, par une saillie (18, 18', 80) disposée sur sa face inférieure, dans une rainure (19, 19', 81) disposée en face extérieure du profilé extrudé, lorsque la saillie (5, 5', 74) s'engage dans la contre-dépouille (6, 6', 6''').

2. Traverse de support selon la revendication 1,
caractérisée en ce qu'un patin d'ajustement (8) peut être inséré entre la nervure ou l'ailette (4) et la paroi (9) non dotée de la contre-dépouille (6) de la rainure (3).

3. Traverse de support selon la revendication 1,
caractérisée en ce que la paroi (9'), opposée à la contre-dépouille (6'), de la rainure (3') s'étend obliquement vers l'extérieur par rapport au fond de la rainure, et en ce qu'une barrette cunéiforme (21), dotée d'une vis (22), est associée à la nervure ou à l'ailette de manière que, lors du serrage de la vis, elle se cale derrière la paroi de rainure (9') et une surface (20) oblique de la nervure ou de l'ailette (4').

4. Traverse de support selon la revendication 1,
caractérisée en ce que
la pièce rapportée est constituée d'une console de colonne de direction (70, 72), orientée vers le compartiment moteur et vers l'habitacle.

5. Traverse de support selon la revendication 4,
caractérisée en ce que
la console de direction est constituée de deux parties pouvant être assemblées l'une au-dessous de l'autre, dont l'une constitue une console de direction avant (70) et l'autre une console de direction arrière (72).

6. Traverse de support pour la fixation du tableau de bord ainsi que des éléments de commande et d'affichage d'un véhicule automobile, constituée d'un profilé extrudé en métal léger et doté de pièces rapportées, telles qu'un module de coussin à air pour passager et/ou de consoles pour la fixation de l'installation de direction, le profil extrudé présentant au moins une rainure (3"), ouverte vers le haut en position de montage, et une face d'appui (15'') orientée vers le côté habitacle, et en ce que la pièce rapportée (7'') est dotée d'un agencement à rainure à ou ailette (23), susceptible d'être inséré, avec une liaison à ajustement de forme, dans la rainure ouverte, ainsi que d'une surface de butée (16'') appuyant à l'état monté sur la surface d'appui (15''),
caractérisée en ce que
la rainure (3'') est limitrophe à l'arête supérieure de la surface d'appui (15'') et constitue un guidage incurvé pour la nervure ou ailette (23) à section transversale adaptée, conçu de manière que, à l'état monté, la surface de butée (16'') du module rapporté (7'') appuie complètement sur la surface d'appui (15'') et une nervure d'encliquetage (24), associée à la pièce rapportée sur sa face inférieure, s'encliquetant, par une partie (25), dans un évidement (26) du profilé extrudé.

7. Traverse de support selon la revendication 6,
caractérisée en ce que
le guidage est réalisé dans la rainure (3''), à une forme d'arc de cercle.
